# EUROPEAN PATENT SPECIFICATION

(11) **EP 0 610 783 B1**
(45) Date of publication and mention of the grant of the patent: **11.09.1996**
(21) Application number: 94101487.0
(22) Date of filing: 01.02.1994
(51) Int. Cl.: B62D 65/00, B62D 27/02

(54) **Method for the production of boxed structural components for vehicle bodyworks**
Verfahren zur Herstellung von formstückigen Konstruktionsteilen für Kraftfahrzeugaufbauten
Procédé de production de profiles de construction pour carrosseries de véhicules

(30) Priority: 09.02.1993 IT TO930075
(43) Date of publication of application: 17.08.1994
(73) Proprietor: FIAT AUTO S.p.A., I-10135 Torino (IT)
(72) Inventor: Da Re', Mario, I-10100 Torino (IT)
(74) Representative: Plebani, Rinaldo

(56) References cited:
- DE-A- 1 602 255
- FR-A- 2 564 913
- GB-A- 991 657
- GB-A- 1 201 253
- AUTOMOTIVE ENGINEER vol. 11, no. 1 , February 1986 pages 55 - 57 'SEALANTS AND ADHESIVES UPDATE'

## Description

The present invention relates to a method for the production of boxed structural components for vehicle bodyworks, either of linear type, for instance the underfloor beam, or of annular type, for instance the engine support frame, the underframe for the rear suspension, etc.

It is known that structural components of the above-mentioned type are generally produced from appropriately bent and spot-welded metal sheet or, when producing frames or underframes, from tubular metal members which are appropriately shaped into a ring by bending and whose opposite ends, once they have been brought into an adjacent position, are joined head to head by welding carried out directly between the ends (usually with flux material) or via the interposition by superimposition of a sleeve which is fitted on one end prior to bending and is then displaced axially in order to be fitted on both adjacent ends to which it is then welded.

The known methods described above have many drawbacks, the most substantial of which consists in the unsatisfactory strength of the structural components, in particular in the connection zones between the sheets or the tubular members; the production of components of complex shape is also difficult and generally exacerbates the problems of connection of the various members of the component; lastly, these components are readily subject to corrosion, especially at the connection points, since it is difficult to protect their interiors from contact with corrosive agents (atmosphere, moisture) which may in particular penetrate through the points of connection of the component to the bodywork.

Producing the connection of the members forming the structural component by adhesives does not solve the above drawbacks, since it makes the connection operation extremely complex as it is necessary to hold the component members together until the adhesive has set and, in particular, requires further operations, such as a stage of heating of the component to allow the cross-linking of the adhesive.

The object of the present invention is to obviate the above-described drawbacks by a method for the production of structural bodywork components, whether linear or annular, making it possible to obtain, in a simple manner and with reduced manufacturing times, components which may be of complex shape and which possess considerable strength and are well protected against corrosive agents.

The invention relates to a method for the production of boxed structural components for vehicle bodyworks, characterized in that at least two or more tubular metal members are connected together by the stages of:
- plastic deformation of at least one member in order to provide thereon respective through openings and a connection end provided with an axial shoulder and adapted to be telescopically inserted on a corresponding adjacent end of a further member;
- pre-assembly of the structural component to be obtained by mechanically connecting, without fastening, the tubular members head to head, in abutment against the shoulder, interposing a structural adhesive between the connected ends;
- mounting of the pre-assembled component on the bodywork;
- coating of the pre-assembled boxed component, both internally and externally, with a protective substance which is applied in conditions such as simultaneously to cause the cross-linking of the adhesive and the consequent rigid fastening of the tubular members to one another.

In particular, the connection end is obtained by hydroforming, broadening the cross-section of the tubular member by a length such that the mechanical disconnection of the latter and the opposite end of the other tubular member is possible only by axial unthreading so that, once pre-assembled, the structural component may be handled and mounted on the bodywork without the adhesive having completely set.

The through openings make it possible to carry out the internal protective coating of the structural component during the cataphoresis treatment of the bodywork by immersion in a bath of protective substance in order to allow the introduction of the protective substance through a first set of openings and, subsequently, the discharge of any excess protective substance which is not deposited on the inner wall of the boxed component via a second set of openings provided on the side opposite to the first.

During the coating stage, the bodywork together with the structural component are brought to a temperature such as to cause the cross-linking of the previously deposited protective substance in order to form a permanent film; the cross-linking of the adhesive with the resultant permanent fastening of the tubular members to one another is simultaneously obtained.

The tubular member, whose end is inserted in the connection end of the other member, is preferably also subject to hydroforming in order to obtain thereon, in the vicinity of the end, a section of broadened cross-section symmetrical with the broadened section of the other member forming the connection end. In this way, the transmission of stresses between the members forming the structural component, once the adhesive has set, is symmetrical, thereby substantially reducing shearing stress.

Further characteristic features and advantages of the method of the invention and of the boxed structural component which can be obtained thereby are set out in the following description, provided solely by way of non-limiting example, with reference to the accompanying drawings, in which:
Figs. 1 to 4 and Figs. 6 and 7 show successive stages of the method of the invention;
Fig. 5 shows, on an enlarged scale and in cross-section, a detail of a boxed component which can be obtained by a possible variant of the method of the invention.

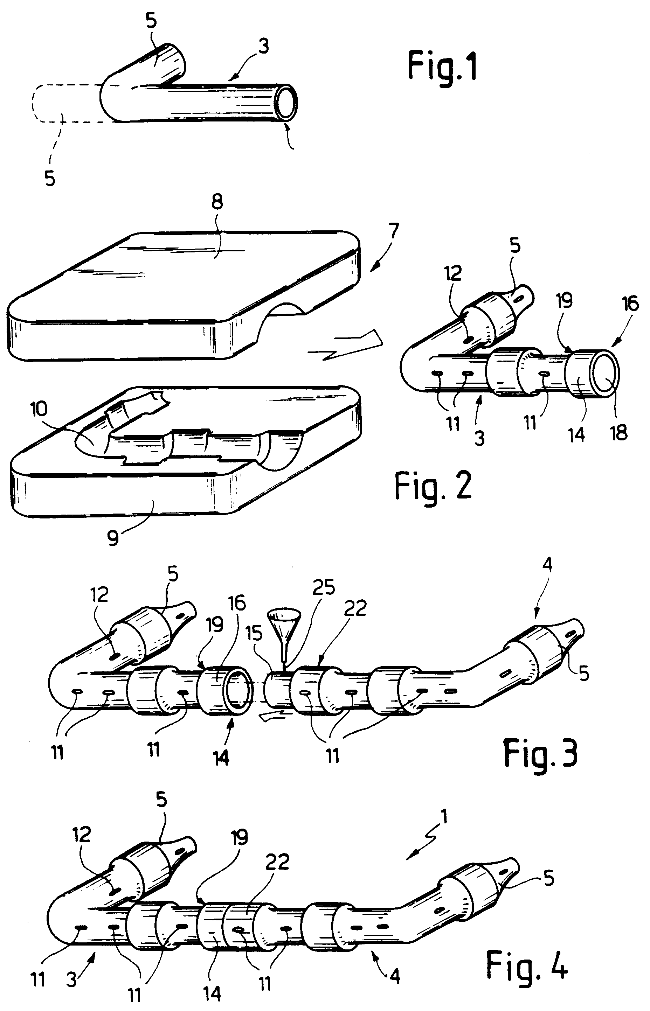

With reference to Figs. 1, 4, 6 and 7, the method of the invention makes it possible to produce boxed structural components 1 for a bodywork 2 of a vehicle from two (or more) tubular members 3, 4 (Fig. 3) made from a metal material, for instance steel or aluminium. In the following description reference is made to the production of an underfloor beam 1, but the method can be applied to the production of any structural component, in particular, as will be seen below, of annular shape, such as an engine support frame or the like.

With reference to Figs. 2 and 3, a first stage of the method of the invention consists in bending, carried out in a known manner, of one or both of the members 3, 4 in order to outline the shape of the component 1 to be produced. In the case illustrated (Fig. 1), one end 5 of the member 3 is bent at 90° with respect to the longitudinal axis of this member in order to outline an end for the connection of the beam 1 to the bodywork 2; a corresponding end 5 of the member 4 is bent in a symmetrical manner (Fig. 3).

Subsequently, the member 3 and, in this case, the member 4 as well, are subject to a stage of plastic deformation, preferably carried out by hydroforming. Fig. 2 shows the stage of hydroforming of the member 3 during which the previously bent member is inserted in a mould 7 formed by two half-moulds 8, 9 which can be superimposed in a leak-tight manner and are provided internally with a die 10 shaped in accordance with the shape of the beam 1 to be obtained; the mould 7 is closed and, in accordance with a known technique which is not illustrated for the purposes of simplicity, a pressurized fluid is introduced inside the member 3 closed in the die 10, which fluid causes the plastic deformation of the member 3 by internal hydrostatic compression with a resultant radial broadening and thinning of the thickness of the member; the member 3 is consequently forced against the walls of the die 10 and assumes its shape.

According to the invention, the die 10 is shaped so as to provide on the member 3, during the deformation stage and at intervals along the entire length thereof, a first set of through openings 11 and a second set of through openings 12 provided on the side opposite to the openings 11. During this second stage the member 3 is also provided with a connection end 14 shaped so that it can subsequently be inserted telescopically on a corresponding adjacent end 15 (Fig. 3) of the member 4.

The connection end 14 is obtained by broadening of the cross-section of an end section 16 of predetermined length of the tubular member 3 so as to obtain therein a cavity 18 ending in an axial shoulder 19 and adapted to receive, substantially without radial play and in abutment against the axial shoulder 19, the corresponding end 15 of the tubular member 4; the length of the section 16 is selected so as to allow the mechanical disconnection of the members 3, 4, once they have been connected, only by axial unthreading of the end 15 from the connection end 14; consequently, once the end 15 engages the cavity 18 the two members 3, 4 are connected in a relatively stable manner, although they are not mutually fixed.

The member 4 is hydroformed in a similar way to the member 3, in a corresponding mould, not shown for the purposes of simplicity, having a die shaped so as to provide the end 15 with a shape and dimensions enabling its connection by insertion in the cavity 18 of the end 14 of the member 3 and to obtain, in a position immediately adjacent to the end 15, a section 22 (Fig. 3) of broader cross-section, which is shaped as a symmetrical mirror image of the connection end 14 and is adapted to abut against the latter following the insertion of the end 15 therein (Fig. 4).

With reference to Fig. 3, a further stage of the method of the invention comprises, after hydroforming of the members 3, 4, their mechanical connection in order to pre-assemble the structural component 1 to be produced; during this stage a structural adhesive 25 of any known type, for instance epoxy, polyester or polyurethane, is deposited in advance, for instance on the outer surface of the end 15, so that the adhesive 25 is interposed between the coupled ends 14, 15; during this pre-assembly stage, the members 3, 4 are mechanically connected but not mutually fixed, as the adhesive 25 generally requires time and heat to set.

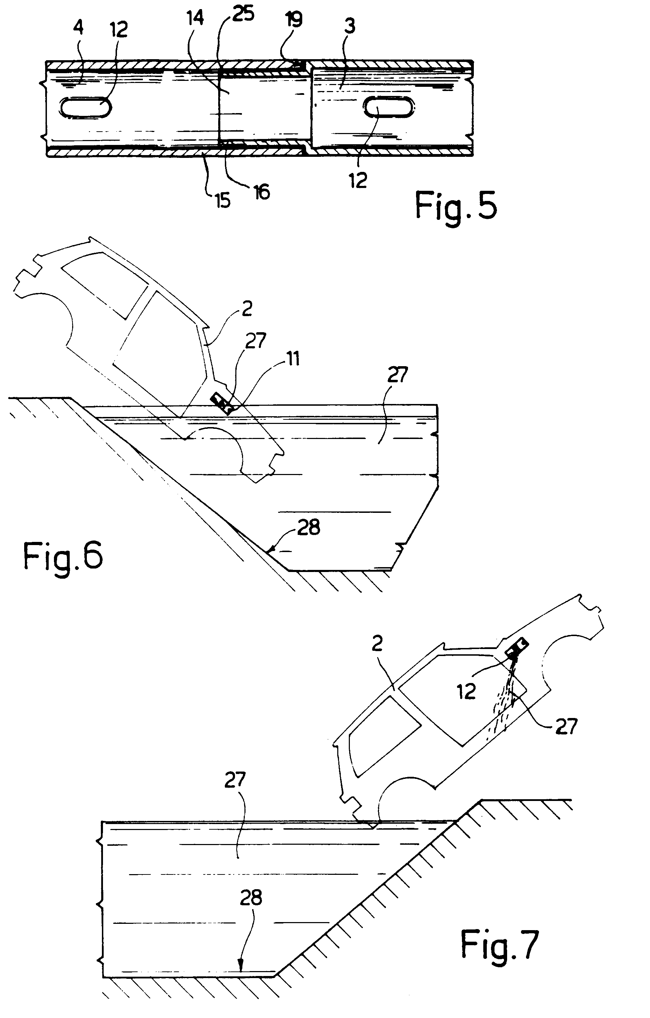

However, because of the sufficiently long connection section 16, because of the fact that the connected ends 14, 15 rest against one another in double axial abutment (the end 15 abutting against the shoulder 19 and the front edge of the end 14 abutting against the section of broader cross-section 22) and because of the viscosity of the adhesive 25, the pre-assembled beam 1, although not yet structurally formed as the two members 3, 4 are, from the point of view of the transmission of stresses, two independent members (Fig. 4), may be handled with ease; according to the invention, use is made of this to mount the component 1, still in the pre-assembled state (i.e. with the members 3, 4 not yet permanently fixed), on the bodywork 2 (Fig. 6).

With reference to Figs. 6 and 7, a further stage of the method of the invention is then carried out and consists in coating the pre-assembled boxed component 1, both internally and externally, with a protective substance 27, for instance formed by a base-coat paint. The latter is applied in conditions such as to cause, simultaneously with its application, the cross-linking of the adhesive 25 and the resultant rigid fastening of the components 3, 4 to one another.

In the case described, the coating stage entails subjecting the pre-assembled component 1, together with the overall bodywork (on which the component 1 has previously been mounted), to deposition in a bath of protective substance 27, by immersion of the bodywork 2 in a tank 28 filled with the protective substance 27 to be deposited, for instance dispersed in an appropriate solution or suspension; the immersion and subsequent removal of the bodywork 2 from the tank 28 are carried out, as shown in Figs. 6 and 7 respectively, so that the protective substance 27 penetrates into the structural component 1 via the openings 11 as a result of the progressive immersion of this component with the bodywork 2 (Fig. 6) into the tank 28, following which any excess not deposited internally escapes through the openings 12 (Fig. 7) during the progressive removal of the bodywork 2 from the tank 28.

In particular, the above deposition stage includes the conduct of a (known) cataphoresis treatment of the bodywork 2 which comprises, during or after the immersion stage, the stage of bringing the bodywork 2, together with the structural component 1, to a temperature causing the cross-linking and resultant fixing of the previously deposited protective substance 27 in the form of a film; this simultaneously produces, in accordance with the invention, the cross-linking and resultant hardening of the adhesive 25, with the resultant stable connection of the members 3, 4 to form a monolithic beam 1. Consequently, the time cycle and the energy needed to carry out the necessary cataphoresis treatment is also used, in accordance with the invention, to cause the adhesion of the members 3, 4 with a clear saving of both production time (and costs) and of energy. The presence of the openings 11, 12 then makes it possible to treat by cataphoresis the interior of the structural component 1 together with the bodywork and to distribute the transmission of heat to the adhesive 25 in a better way.

According to the variant shown in Fig. 5, it is obviously possible to shape the ends 14, 15 in a different way to that described above without thereby departing from the scope of the invention; in this case, the stage of plastic deformation of the members 3, 4 may be used to vary the cross-section of the section 16 of the member 3, so that the connection end 14 can be inserted in the end 15 rather than vice versa; in this case there is only one axial shoulder, illustrated by 19. A similar situation can be obtained, by a further possible variant, in the case in which the broadened section 22 is not provided on the member 4 of Figs. 3 and 4.

According to a further possible variant, not shown for simplicity, the tubular members 3, 4 are bent at 180° to form two respective half-rings which are then hydroformed so as to obtain on each, in an opposite position, a broadened connection end 14; the members 3, 4 then have, each on opposite sides, an end 14 facing an end 5 and are mutually connected by inserting, after deposition of the structural adhesive, each connection end 14 on the corresponding opposite end 5 of the other member, so as to form a pre-assembled structural component shaped as an annular frame.

## Claims

1. A method for the production of boxed structural components (1) for vehicle bodyworks (2), characterized in that at least two tubular metal members (3, 4) are connected together by the stages of:
- plastic deformation of at least one member (3, 4) in order to provide thereon respective through openings (11, 12) and a connection end (14) provided with an axial shoulder (19) and adapted to be telescopically inserted on a corresponding adjacent end (5, 15) of a further member (3, 4);
- pre-assembly of the structural component (1) to be obtained by mechanically connecting, without fastening, the tubular members (3, 4) head to head, in abutment against the shoulder (19), interposing a structural adhesive (25) between the connected ends;
- mounting of the pre-assembled component (1) on the bodywork (2);
- coating of the pre-assembled boxed component (1), both internally and externally, with a protective substance (27) which is applied in conditions such as simultaneously to cause the cross-linking of the adhesive (25) and the resultant rigid fastening of the tubular members (3, 4) to one another.

2. A method as claimed in claim 1, characterized in that the coating stage comprises subjecting the pre-assembled component (1), together with the overall bodywork (2), to deposition in a bath of protective substance (27) by immersion in a tank (28) and in that the immersion and subsequent removal from the tank (28) are carried out such that the protective substance (27) is introduced inside the structural component (1) via a first set of openings (11) and is then caused to emerge from the structural component (1) via a second set of openings (12) provided on the side opposite to the first.

3. A method as claimed in claim 2, characterized in that, during or after the immersion stage, the structural component (1) is brought, together with the bodywork (2), to a temperature such as to cause the cross-linking and resultant fixing of the protective substance (27) in the form of a film and simultaneously the cross-linking and consequent hardening of the adhesive (25) with the resultant stable connection of the tubular members (3, 4) to form the structural component (1).

4. A method as claimed in one of the preceding claims, characterized in that prior to the plastic deformation stage, the tubular member (3, 4) is subject to a bending stage.

5. A method as claimed in one of the preceding claims, characterized in that the plastic deformation stage is obtained by hydroforming, inserting the tubular member (3, 4) to be hydroformed in a leak-tight mould (7) and introducing a pressurized fluid inside the member (3, 4) to be hydroformed.

6. A method as claimed in claim 5, characterized in that the connection end (14) is obtained by broadening of the cross-section of an end section (16) of predetermined length of a first tubular member (3) so as to obtain within this section a cavity (18) ending in the axial shoulder (19) and adapted to receive, substantially without radial play and in abutment against the axial shoulder (19), a corresponding end (15) of a second tubular member (4) and in that the length of this broadened section (16) is such as to allow the mechanical disconnection of the tubular members (3, 4) solely by axial unthreading from the connection end (14).

7. A method as claimed in claim 6, characterized in that the second tubular member (4) is provided, in a position immediately adjacent to the end (15) to be inserted in the connection end (14) of the first tubular member (3), with a section (22) of broadened cross-section shaped as a symmetrical mirror image of the connection end (14) and adapted to abut against the latter following the introduction therein of the end (15) of the second member (4).

8. A method as claimed in one of the preceding claims, characterized in that two tubular members (3, 4) are bent to form two respective half-rings, are subsequently hydroformed so as to obtain a connection end (14) on each and are mutually connected by inserting, after deposition of a structural adhesive (25), each connection end (14) on a corresponding opposite end (5) of the other member so as to form a pre-assembled structural component (1) shaped as an annular frame.

9. A boxed structural component (1) for a vehicle bodywork (2), characterized in that it is produced by the method as claimed in one of the preceding claims.

## Patentansprüche

1. Verfahren zur Herstellung von formstückigen Konstruktionsteilen (1) für Kraftfahrzeugaufbauten (2), dadurch gekennzeichnet, daß wenigstens zwei rohrförmige Metallteile (3, 4) miteinander verbunden werden durch die Stufen:
- plastische Verformung wenigstens eines Teiles (3, 4), um daran jeweils Durchtrittsöffnungen (11, 12) und ein mit einer axialen Schulter (19) versehenenes Verbindungsende (14) anzubringen, und das vorgesehen ist, teleskopartig auf ein korrespondierendes benachbartes Ende (5, 15) eines weiteren Teils (3, 4) aufgeschoben zu werden;
- Vormontage des Konstruktionsteiles (1), um durch mechanisches Verbinden die rohrförmigen Teile (3, 4) Kopf an Kopf durch Einbringen eines Strukturklebstoffes (25) zwischen die verbundenen Enden in Anlage gegen die Schulter (19) ohne Befestigen zu erhalten;
- Anordnen des vormontierten Bauteils (1) auf dem Aufbau (2);
- Beschichten des vormontierten formstückigen Teils (1), sowohl innen als auch außen mit einer Schutzsubstanz (27), die unter den Bedingungen gleichmäßig aufgetragen wird, die Vernetzung des Klebstoffes (25) und das Ergebnis starten Miteinanderbefestigens der rohrförmigen Teile (3, 4) herbeizuführen.

2. Verfahren nach Anspruch 1, dadurch gekennzeichnet, daß die Beschichtungsstufe das Unterziehen des vormontierten Teils (1) zusammen mit dem gesamten Aufbau (2) zum Einbringen in ein Schutzsubstanzbad (27) durch Tauchen in eine Wanne (28) umfaßt, und daß das Tauchen und nachfolgende Entfernen aus der Wanne (28) derart ausgeführt wird, daß die Schutzsubstanz (27) ins Innere des Konstruktionsteils (1) über eine erste Gruppe von Öffnungen (11) eingeführt und dann veranlaßt wird, aus dem Konstruktionsteil (1) über eine zweite, auf der entgegengesetzten Seite zur ersten angeordneten Gruppe von Öffnungen (12) auszutreten.

3. Verfahren nach Anspruch 2, dadurch gekennzeichnet, daß während oder nach der Tauchstufe das Konstruktionsteil (1) zusammen mit dem Aufbau (2) auf eine solche Temperatur gebracht wird, daß das Vernetzen und das sich ergebende Anhaften der Schutzsubstanz (27) in Form eines Films und gleichzeitig das Vernetzen und nachfolgende Aushärten des Klebstoffes (25) mit der sich ergebenden starten Verbindung der rohrförmigen Teile (3, 4) herbeigeführt wird, um das Konstruktionsteil (1) zu bilden.

4. Verfahren nach einem der vorangegangenen Ansprüche, dadurch gekennzeichnet, daß vor der plastischen Verformungsstufe das rohrförmige Teil (3, 4) einer Biegestufe unterzogen wird.

5. Verfahren nach einem der vorangegangenen Ansprüche, dadurch gekennzeichnet, daß die plastische Verformungsstufe durch Hydroformen, Einsetzen des zu hydroformenden rohrförmigen Teils (3, 4) in eine leckdichte Gußform (7) und Einbringen einer unter Druck stehenden Flüssigkeit ins Innere des zu hydroformenden Teils (3, 4) erhalten wird.

6. Verfahren nach Anspruch 5, dadurch gekennzeichnet, daß das Verbindungsende (14) durch Aufweiten des Querschnittes eines Endbereiches (16) von vorbestimmter Länge eines ersten rohrförmigen Teils (3) erhalten wird, um so innerhalb dieses Bereiches einen Hohlraum (18) zu erzielen, der in die axiale Schulter (19) mündet und vorgesehen ist, ein korrespondierendes Ende (15) eines zweiten rohrförmigen Teils (4) im wesentlichen ohne radiales Spiel und in Anlage gegen die axiale Schulter (19) aufzunehmen, und daß die Länge dieses aufgeweiteten Bereiches (16) derart ist, die mechanische Trennung der rohrförmigen Teile (3, 4) nur durch axiales Wegziehen aus dem Verbindungsende (14) zu ermöglichen.

7. Verfahren nach Anspruch 6, dadurch gekennzeichnet, daß das zweite rohrförmige Teil (4) mit einem Bereich (22) aufgeweiteten Querschnitts, der als ein symmetrisches Spiegelbild des Verbindungsendes (14) mit einem Bereich (22) aufgeweiteten Querschnitts ausgebildet und vorgesehen ist, gegen letzteres nach dem Einsetzen des Endes (15) des zweiten Teils (4) anzustoßen.

8. Verfahren nach einem der vorangegangenen Ansprüche, dadurch gekennzeichnet, daß zwei rohrförmige Teile (3, 4) gebogen werden, um zwei entsprechende Bügelhälften zu bilden, die nachfolgend hydrogeformt werden, um so jeweils ein Verbindungsende (14) zu erhalten, und die nach Anhaften eines Strukturklebstoffes (25) durch gegenseitiges Aufschieben jedes Verbindungsendes (14) auf ein korrespondierendes gegenüberliegendes Ende (5) des anderen Teils derart verbunden werden, ein vormontiertes, als ein ringförmiger Rahmen geformtes Konstruktionsteil (1) zu bilden.

9. Formstückiges Konstruktionsteil (1) für einen Kraftfahrzeugaufbau (2), dadurch gekennzeichnet, daß es durch ein Verfahren, wie in einem der vorangegangenen Ansprüche beansprucht, hergestellt wird.

## Revendications

1. Procédé pour la fabrication de composants structurels emboîtés (1) pour carrosseries de véhicule (2), caractérisé en ce qu'au moins deux éléments métalliques tubulaires (3,4) sont connectés ensemble par les opérations de :
déformation plastique d'au moins un élément (3, 4) afin de créer sur celui-ci des trous traversants respectifs (11,12) et une extrémité de connexion (14) présentant un épaulement axial (19) et prévue pour être télescopiquement insérée sur une extrémité adjacente correspondante (5,15) d'un autre élément (3,4) ;
préassemblade du composant structurel (1) à obtenir,par connexion mécanique, sans fixation, des éléments tubulaires (3,4) tête à tête, en butée contre l'épaulement (19), et interposition d'un adhésif structurel (25) entre les extrémités connectées ;
montage du composant préassemblé (1) sur la carrosserie (2) ;
revêtement du composant emboîté préassemblé (1), à la fois intérieurement et extérieurement, avec une substance protectrice (27) qui est appliquée dans des conditions telles qu'elles provoquent simultanément la réticulation de l'adhésif (25) et la fixation rigide résultante des éléments tubulaires (3,4) les uns aux autres.

2. Procédé suivant la revendication 1, caractérisé en ce que l'opération de revêtement comprend la soumission du composant préassemblé (1), en même temps que l'ensemble de la carrosserie (2), à un dépôt dans un bain de substance protectrice (25) par immersion dans une cuve (28); et en ce que l'immersion et la sortie subséquente dans la cuve et hors de la cuve (28) sont effectuées d'une manière telle que la substance protectrice (27) est introduite à l'intérieur du composant structurel (1) par l'intermédiaire d'un premier ensemble de trous (11) et sort ensuite du composant structurel (1) par l'intermédiaire d'un deuxième ensemble de trous (12) prévu du côté opposé au premier ensemble.

3. Procédé suivant la revendication 2, caractérisé en ce que, pendant ou après l'opération d'immersion, on porte le composant structurel (1), en même temps que la carrosserie (2), à une température telle qu'elle provoque la réticulation et la fixation résultante de la substance protectrice (27) sous la forme d'un film et simultanément la réticulation et le durcissement résultant de l'adhésif (25), ayant pour résultat une jonction stable des éléments tubulaires (3,4) pour constituer le composant structurel (1).

4. Procédé suivant une des revendications précédentes, caractérisé en ce que, avant l'opération de déformation plastique, on soumet l'élément tubulaire (3,4) à une opération de cintrage.

5. Procédé suivant une des revendications précédentes, caractérisé en ce que l'opération de déformation plastique est effectuée par hydroformage, insertion de l'élément tubulaire (3,4) à hydroformer dans un moule étanche (7) et introduction d'un fluide sous pression à l'intérieur de l'élément (3,4) à hydroformer.

6. Procédé suivant la revendication 5, caractérisé en ce que l'extrémité de connexion (14) est obtenue par élargissement de la section transversale d'une partie d'extrémité (16) de longueur prédéterminée d'un premier élément tubulaire (3) de façon à obtenir, à l'intérieur de cette partie, une cavité (18) se terminant dans l'épaulement axial (19) et pouvant recevoir, sensiblement sans jeu radial et en butée contre l'épaulement axial (19), une extrémité correspondante (15) d'un deuxième élément tubulaire (4), et en ce que la longueur de cette partie élargie (16) est telle qu'elle permet la séparation mécanique des éléments tubulaires (3,4) seulement par déboîtage axial hors de l'extrémité de connexion (14).

7. Procédé suivant la revendication 6, caractérisé en ce que le deuxième élément tubulaire (4) comprend, à une position immédiatement adjacente à l'extrémité (15) à insérer dans l'extrémité de connexion (14) du premier élément tubulaire (3), une partie (22) de section transversale élargie formée symétriquement à l'extrémité de connexion (14) et prévue pour buter contre cette dernière à la suite de l'introduction de l'extrémité (15) du deuxième élément (4) dans ladite extrémité de connexion.

8. Procédé suivant une des revendications précédentes, caractérisé en ce que deux éléments tubulaires (3,4) sont cintrés pour former deux demi-anneaux respectifs, ils sont ensuite hydroformés de manière à créer une extrémité de connexion (14) sur chacun et ils sont mutuellement connectés par insertion, après dépôt d'un adhésif structurel (25), de chaque extrémité de connexion (14) sur une extrémité opposée correspondante (5) de l'autre élément de manière à constituer un composant structurel préassemblé (1) en forme de cadre annulaire.

9. Composant structurel emboîté (1) pour une carrosserie de véhicule (2), caractérisé en ce qu'il est fabriqué par le procédé suivant une des revendications précédentes.
